# EUROPEAN PATENT APPLICATION

(11) **EP 3 745 011 A1**
(43) Date of publication of application: **02.12.2020**
(21) Application number: 19191539.6
(22) Date of filing: 13.08.2019
(51) Int. Cl.: F16K 31/365, G05D 16/06

(54) **PRESSURE RELIEF VALVE**

(30) Priority: 29.05.2019 EP 19177394
(71) Applicant: Microtecnica S.r.l., 10126 Turin (IT)
(72) Inventor: MEZZINO, Giacomo, 10127 Torino (IT); TAFUNI, Domenico, 10128 Torino (IT); MORNACCHI, Andrea, 10165 Torino (IT)
(74) Representative: Dehns

(57) **Abstract**

A pressure relief valve (200) comprising:
a first port (210) configured to receive a first gas at an input pressure;
a second port (212) configured to receive a second gas at a regulating pressure;
a third (214) port in fluid communication with the first port via an orifice (220) and configured to output the first gas at an output pressure;
a diaphragm (230) configured to flex in a direction along an axis (A) and configured to control the passage of the first gas through the orifice between the first port and the third port, such that the output pressure of the gas is dependent on the flex of the diaphragm; and
a resilient member (240) configured to bias the diaphragm,
wherein the valve comprises a chamber (280) at least partly defined by the diaphragm and in fluid communication with the second port, such that the force exerted by the second gas within the chamber on the diaphragm acts against the action of the resilient member.

## Description

### FIELD

The present disclosure relates generally to a pressure relief valve for a pressure regulator.

### BACKGROUND

A pressure relief valve is a safety feature that is configured to open automatically when the pressure of a system or environment exceeds a specified amount. In this situation, the pressure relief valve opens, which releases air and reduces the pressure of the system. Once the pressure falls below the specified amount the relief valve closes and the pressure levels return back to normal. It can be provided as a safety mechanism to prevent any adverse effects in high-pressure environments.

A pressure regulator may be used to match a flow of gas through the regulator to the demand for gas placed upon it, whilst maintaining a constant output pressure. If the load flow decreases, then the regulator flow must decrease as well. If the load flow increases, then the regulator flow must increase in order to keep the controlled pressure from decreasing due to a shortage of gas in the pressure system.

A pressure regulator typically includes a restricting element, a loading element, and a measuring element. The restricting element may be a valve that can provide a variable restriction to the flow, such as a globe valve, butterfly valve, poppet valve, etc. The loading element may be a part that can apply the needed force to the restricting element. This loading can be provided by a weight, a spring, a piston actuator, or the diaphragm actuator in combination with a spring. The measuring element may function to determine when the inlet flow is equal to the outlet flow. Various types of pressure regulator are known in the art and will not be described in detail herein.

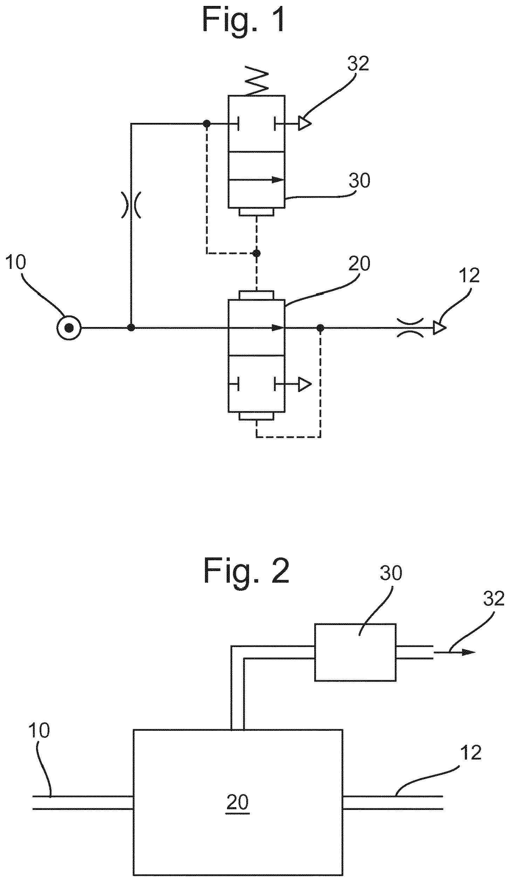

Relief valves have been incorporated as part of a system including a pressure regulator. Figs. 1 and 2 show (schematically) an example in which an input 10 leads to an output 12 through a pressure regulator 20. The output 12 may lead to a component to be supplied with pressurised air from the pressure regulator 20.

The pressure regulator 20 may be configured to regulate the pressure of gas (e.g., air) being passed from the input 10 to the output 12. The pressure regulator 20 may also be configured to stop the flow of gas from the input 10 to the output 12, as indicated by the flow circuit diagram in Fig. 1.

A relief valve 30 may be fluidly connected to the pressure regulator 20 and/or the gas line passing from the input 10 to the output 12. The relief valve 30 is configured to release gas from, and reduce the pressure of the gas within the pressure regulator 20 when the pressure of the gas within the pressure regulator 20 (or otherwise passing from the input 10 to the output 12) exceeds a specified amount.

That is, when the pressure of the gas within the pressure regulator 20 (or otherwise passing from the input 10 to the output 12) exceeds the specified amount, the pressure relief valve 30 moves to its open position and vents gas to an external environment as indicated at arrow 32. It should be noted that the pressure relief valve 30 is shown in its closed position in Fig. 1.

The relief valve 30 may be configured to regulate the pressure within a chamber C of the pressure regulator 20 and prevent excessive build-up of pressure within the chamber.

It is desired to improve the function of a relief valve when provided in combination with a pressure regulator.

### SUMMARY

In an aspect there is provided a pressure relief valve comprising a first port, a second port and a third port. The first port is configured to receive a first gas at an input pressure, the second port is configured to receive a second gas at a regulating pressure (which may be different from the input pressure), and the third port is in fluid communication with the first port via an orifice, and is configured to output the first gas at an output pressure. The valve further comprises a piston movable along an axis and configured to control the passage of gas through the orifice between the first port and the second port, such that the output pressure of the gas is dependent on the axial position of the piston. The valve further comprises a resilient member configured to bias the piston, wherein the valve comprises a chamber at least partly defined by the piston and in fluid communication with the second port, such that the force exerted by the gas within the chamber on the piston acts against the action of the resilient member.

The above arrangement provides an improved pressure relief valve that is able to use the resilient member and piston to control the passage of gas through the orifice, based on the pressure of gas within the chamber.

The piston may be configured to move between a fully open position, in which a maximum flow of gas is permitted through the orifice, and a closed position, in which substantially no gas is permitted to flow through the orifice.

The resilient member may be configured to bias the piston towards its open position.

The force exerted by the gas within the chamber on the piston may bias the piston towards its open position.

A pin may be operatively connected to the piston and may be configured to move along the axis with the piston, such that movement of the piston causes a corresponding movement of the pin.

The orifice may comprise a gap between the pin and a fixed housing of the valve, and movement of the pin along the axis causes the gap to become larger and smaller.

The pressure relief valve may further comprise a device configured to set and/or regulate the stroke of the piston. This avoids the need to set a preload for the resilient member(s) and piston prior to assembly, as may be required with static devices, and the further need to maintain such preload within tolerances throughout use.

The device may comprise a pin configured to contact the piston, wherein the axial position of the pin sets the axial position of the piston.

The resilient member may be configured to bias the piston against the pin.

The pin may comprise a screw thread, and may be movable along the axis by rotating the pin so as to move the pin along the screw thread.

In an aspect there is provided a system comprising a pressure relief valve as described above, wherein the system further comprises a pressure regulator, and the pressure relief valve is configured to release gas from, and/or reduce the pressure of the gas within the pressure regulator.

The pressure regulator may comprise a chamber, and the gas pressure within the chamber may be configured to control or otherwise influence a position of one of the operative components of the pressure regulator, wherein the third port is in fluid communication with the chamber of the pressure regulator.

The operative component of the pressure regulator may be configured to vary an output pressure of the pressure regulator.

The operative component of the pressure regulator may be a regulating piston.

In an aspect there is provided a method of operating a pressure relief valve (e.g., a pressure relief valve described above, which may or may not form part of a system as described above), the method comprising:
receiving a first gas into a first port of the valve at an input pressure;
receiving a second gas into a second port of the valve at a regulating pressure;
outputting the first gas at an output pressure through a third port, wherein the third port is in fluid communication with the first port via an orifice;
moving a piston along an axis and to control the passage of gas through the orifice between the first port and the second port, wherein the output pressure of the gas is dependent on the axial position of the piston; and
biasing the piston using a resilient member,
wherein the valve comprises a chamber at least partly defined by the piston and in fluid communication with the second port, such that the force exerted by the gas within the chamber on the piston acts against the action of the resilient member.

In an aspect there is provided a pressure relief valve comprising a first port, a second port and a third port. The first port is configured to receive a first gas at an input pressure, the second port is configured to receive a second gas at a regulating pressure (which may be different from the input pressure), and the third port is in fluid communication with the first port via an orifice, and is configured to output the first gas at an output pressure.

The valve further comprises a diaphragm configured to flex in a direction along an axis and configured to control the passage of gas through the orifice between the first port and the second port, such that the output pressure of the gas is dependent on the flex of the diaphragm.

The valve further comprises a resilient member configured to bias the diaphragm, wherein the valve comprises a chamber at least partly defined by the diaphragm and in fluid communication with the second port, such that the force exerted by the gas within the chamber on the diaphragm acts against the action of the resilient member.

The above arrangement provides an improved pressure relief valve that is able to use the resilient member and diaphragm to control the passage of gas through the orifice, based on the pressure of gas within the chamber. The use of a flexing diaphragm permits a reduction in friction due to the reduced number of parts necessary to provide the biasing force that acts against the action of the resilient member.

The diaphragm may be configured to flex between a rest position, in which a maximum flow of gas is permitted through the orifice, and an open or flexed position, in which a reduced gas flow or substantially no gas flow is permitted through the orifice.

The resilient member may be configured to bias the diaphragm towards its rest position.

The force exerted by the gas within the chamber on the diaphragm may bias the piston towards an open or flexed position.

A pin may be operatively connected to the diaphragm and may be configured to move along the axis with the diaphragm, such that movement of the diaphragm causes a corresponding movement of the pin.

The orifice may comprise a gap between the pin and a fixed housing of the valve, wherein movement of the pin along the axis causes the gap to become larger and smaller.

In an aspect there is provided a system comprising a pressure relief valve as described above, wherein the system further comprises a pressure regulator, and the pressure relief valve is configured to release gas from, and/or reduce the pressure of the gas within the pressure regulator.

The pressure regulator may comprise a chamber, and the gas pressure within the chamber may be configured to control or otherwise influence a position of one of the operative components of the pressure regulator, wherein the third port is in fluid communication with the chamber of the pressure regulator.

The operative component of the pressure regulator may be configured to vary an output pressure of the pressure regulator.

The operative component of the pressure regulator may be a regulating piston.

In an aspect there is provided a method of operating a pressure relief valve (e.g., a pressure relief valve described above, which may or may not form part of a system as described above), the method comprising:
receiving a first gas into a first port of the valve at an input pressure;
receiving a second gas into a second port of the valve at a regulating pressure;
outputting the first gas at an output pressure through a third port, wherein the third port is in fluid communication with the first port via an orifice;
flexing a diaphragm to control the passage of gas through the orifice between the first port and the second port, wherein the output pressure of the gas is dependent on the amount of flex of the diaphragm; and
biasing the diaphragm using a resilient member,
wherein the valve comprises a chamber at least partly defined by the diaphragm and in fluid communication with the second port, such that the force exerted by the gas within the chamber on the diaphragm acts against the action of the resilient member.

### BRIEF DESCRIPTION OF THE DRAWINGS

Various embodiments will now be described, by way of example only, and with reference to the accompanying drawings in which:
Figs. 1 and 2 show an example in which an input leads to an output through a pressure regulator;
Fig. 3 shows a system according to an embodiment of the present disclosure;
Fig. 4 shows a pressure relief valve according to an embodiment;
Fig. 5 shows an external view of a portion of the system of Fig. 3, with a cross-section through the pressure relief valve (which corresponds to that of Fig. 4); and
Fig. 6 shows a further embodiment of the present disclosure.

### DETAILED DESCRIPTION

Herewith will be described various embodiments of a pressure relief valve that may be used in combination with a pressure regulator (or other suitable device).

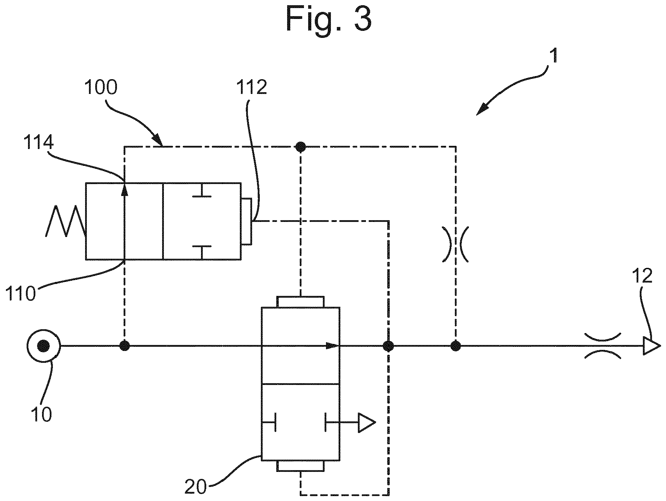

Fig. 3 schematically shows a system 1 according to an embodiment of the present disclosure. As will be appreciated, the position of the pressure regulator 20 between the input 10 and the output 12 is largely unchanged from that shown above in respect of Figs. 1-2. However, the arrangement of the pressure relief valve is changed, and a new pressure relief valve 100 is provided.

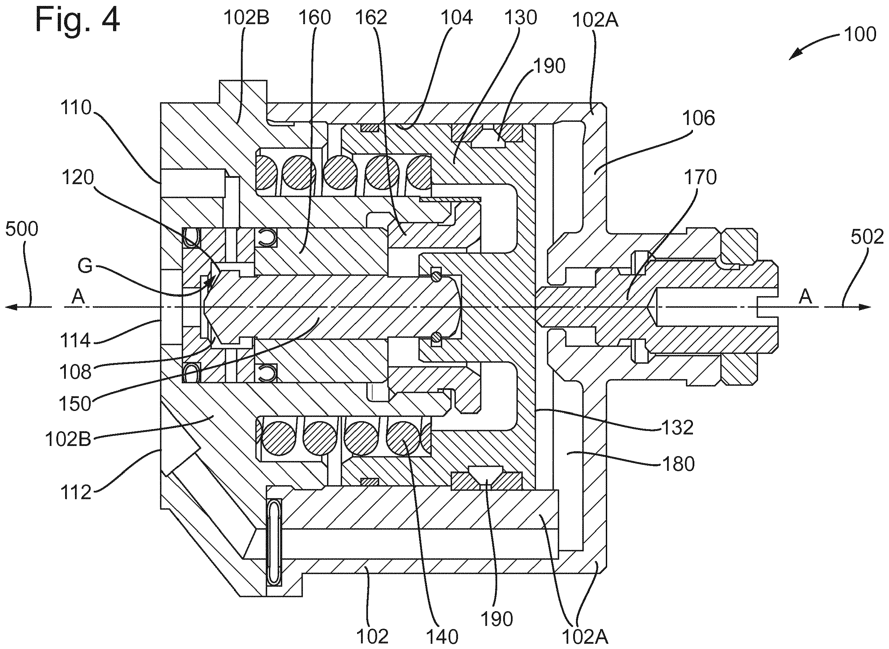

Fig. 4 shows the pressure relief valve 100 according to an embodiment.

The pressure relief valve 100 comprises a housing 102 having a first port 110, a second port 112 and a third port 114. The housing 102 may comprise a first part 102A and a second part 102B, wherein the first part 102A and the second part 102B combine to provide the substantially fixed portion of the pressure relief valve 100. In various embodiments the second part 102B may plug into the first part 102A to form the housing 102. Other arrangements are possible to connect the first and second parts 102A and 102B, or in other embodiments the housing 102 could be formed by a single piece.

The first port 110 may be exposed to gas from the input 10 so that the pressure of gas entering the first port 110 may be at the input pressure of the system 1.

The second port 112 may be exposed to gas from the pressure regulator 20, and specifically from the downstream end of the pressure regulator 20 (or adjacent the output of the pressure regulator 20), so that the pressure of gas entering the second port 112 may be at the output pressure of the system 1.

The third port 114 is fluidly connectable to the first port 110 via a piloted orifice 120, wherein in use gas may pass from the first port 110 to the third port 114 when the orifice 120 is in an open position. As described in more detail below, the orifice 120 may be closed, or open to varying degrees in order to provide a regulating function for the gas flowing between the first port 110 and the third port 114.

The third port 114 is fluidly connected to the pressure regulator 20, and in accordance with various embodiments with a chamber of the pressure regulator 20, wherein the pressure within the chamber controls a position of one of the operative components of the pressure regulator (e.g., a regulating piston), which can vary the output pressure of the pressure regulator.

One example of a pressure regulator employing a regulating piston can be found in United States Patent Application No. 2017/0220055, which pressure regulator would be suitable as the pressure regulator 20. However, any suitable pressure regulator could be used that employs or otherwise requires a relief valve.

The pressure relief valve 100 further comprises a piston 130 that is movable within an internal (e.g., cylindrical) cavity 104 of the housing 102, e.g., the first part 102A thereof, wherein the piston 130 is configured to move back and forth along an axis A. A resilient member 140 (e.g., a spring) may be located between the housing 102, e.g., the second part 102B thereof and the piston 130, and is configured to bias the piston 130 in an axial direction (see arrow 502).

The pressure relief valve 100 further comprises a pin 150 that is operatively connected to the piston 130 and is configured to move along the axis A with the piston 130, such that movement of the piston 130 causes a corresponding movement of the pin 150.

In various embodiments the pin 150 may comprise the same part as the piston 130, although in the illustrated embodiment is shown as a separate piece. The pin 150 may be slidably received within a bushing 160, which bushing 160 may be fixedly attached to the housing 102, e.g., the second part 102B thereof. The bushing 160 may be fixedly attached within the second part 102B of the housing 102 in this manner using a suitable fixing member 162.

The pin 150 is movable along the axis A between an open position (a fully open position is shown in Fig. 4) and a closed position.

In the open position the pin 150 does not block the passage of gas through the orifice 120 (e.g., between the first port 110 and the third port 114), for example in this position gas may pass through a gap G defined in the orifice 120 between the pin 150 and a rim 108 of the housing 102.

In the closed position the pin 150 closes the orifice 120, e.g., by substantially blocking the passage of gas between the first port 110 and the third port 114, for example the pin 150 may contact a rim 108 of the housing 102 and close the gap G.

The first port 110 is configured to receive a gas at an input pressure, and the third port 114, which is in fluid communication with the first port 110 via the orifice 120, is configured to output the gas at an output pressure. The piston 130 is movable along the axis A and is configured to control the passage of gas through the orifice 120 between the first port 110 and the third port 114, such that the axial position of the piston 130 changes the output pressure of the gas.

The second port 112 of the pressure relief valve 100 fluidly communicates with a chamber 180 that may be located adjacent a base 106 of the housing 102. The chamber 180 is at least partially defined by a surface 132 of the piston 130, for example a base surface of the piston 130. The surface 132 is configured so that pressurised air acting on the surface 132 will create a force that opposes the action of the resilient member 140, such that an increase in gas pressure within the chamber 180 causes an increase in the force opposing the action of the resilient member 140.

It will be appreciated that the gas pressure within the chamber 180 corresponds directly to the pressure of the gas entering the second port 112, and as such may correspond to the pressure of gas from the pressure regulator 20, and specifically from the downstream end of the pressure regulator 20 (or adjacent the output of the pressure regulator 20), so that the pressure of gas entering the second port 112 and the chamber 180 may be at the output pressure of the system 1.

In other words, the output pressure of the system 1 may act against the action of the resilient member 140 and (above a certain level) cause the piston 130 to move against the action of the resilient member 140 (in the direction of arrow 500). This, in turn, causes the pin 150 to move in the same direction and towards a position in which it closes the orifice 120. Should the output pressure of the system 1 be high enough, therefore, the pin 150 will be moved into its closed position so as to close the orifice 120.

The arrangement described above provides a feedback mechanism, wherein the output pressure of the system 1 is used to regulate the displacement of the pin 150 within the pressure relief valve 100, and in turn regulate the passage of gas through the pressure relief valve 100 between the input (corresponding to the first port 110) and the output (corresponding to the third port 114). This effectively provides a feedback signal that can be used to optimise the pressure regulation of the pressure regulator.

The pressure relief valve 100 may further comprise a device configured to set and/or regulate the stroke of the piston 130, otherwise referred to as the preload of the resilient member 140. This is shown in Fig. 4 as a regulating pin 170 (e.g., a screw) that is configured to contact the piston 130 (e.g., the surface 132 thereof) and move along the axis A, wherein the axial position of the regulating pin 170 sets the axial position of the piston 130. In other words, the resilient member 140 biases the piston 130 against the regulating pin 170. The axial position of the pin 170 may be modified by moving it along the axis A, and this may be achieved by providing a screw thread between the regulating pin 170 and a portion of the housing 102 (or other fixed component).

In various embodiments, the regulating pin 170 may be replaced by spacers, for example positioned between the resilient member 140 and the housing 102 or the piston 130, which would have the same function as the regulating pin 170. However, using a regulating pin 170, and specifically one incorporating a screw thread, provides the optimum amount of control of the stroke of the piston 130, or preload of the resilient member 140.

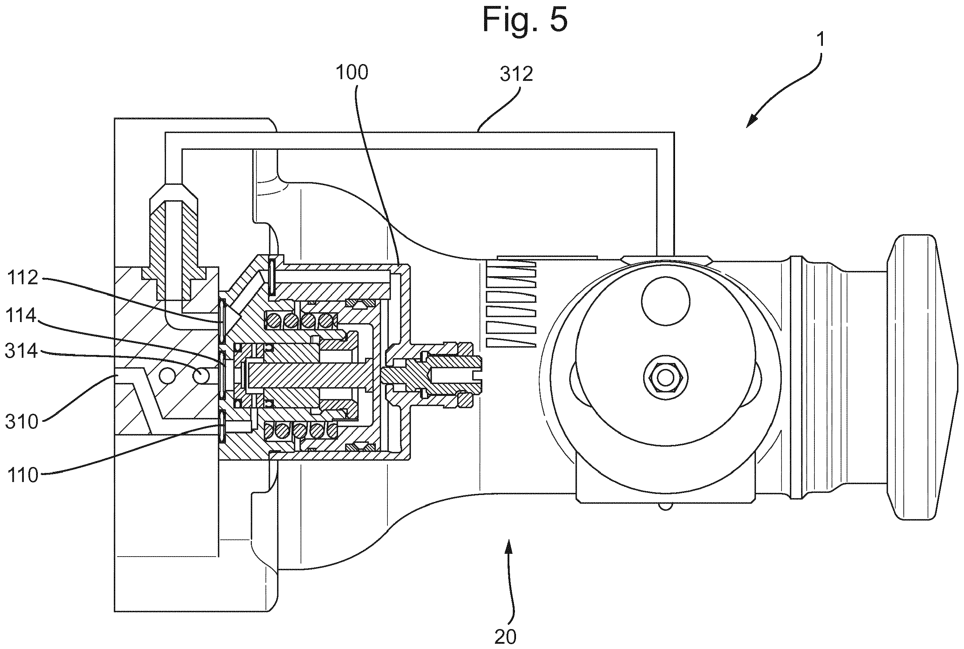

Fig. 5 shows an external view of a portion of the system 1, with a cross-section through the pressure relief valve 100. An input duct 310 is shown that fluidly connects the first port 110 with gas received from the input 10 (and prior to its entry into the pressure regulator 20). In addition, a feedback duct 312 fluidly connects the second port 112 with an output of the pressure regulator 20, and a reference duct 314 is fluidly connected to the third port 114 as well. As discussed above the gas flowing through reference duct 314 may flow to a chamber of the pressure regulator 20, wherein the pressure within the chamber controls a position of one of the operative components of the pressure regulator (e.g., a regulating piston), which can vary the output pressure of the pressure regulator.

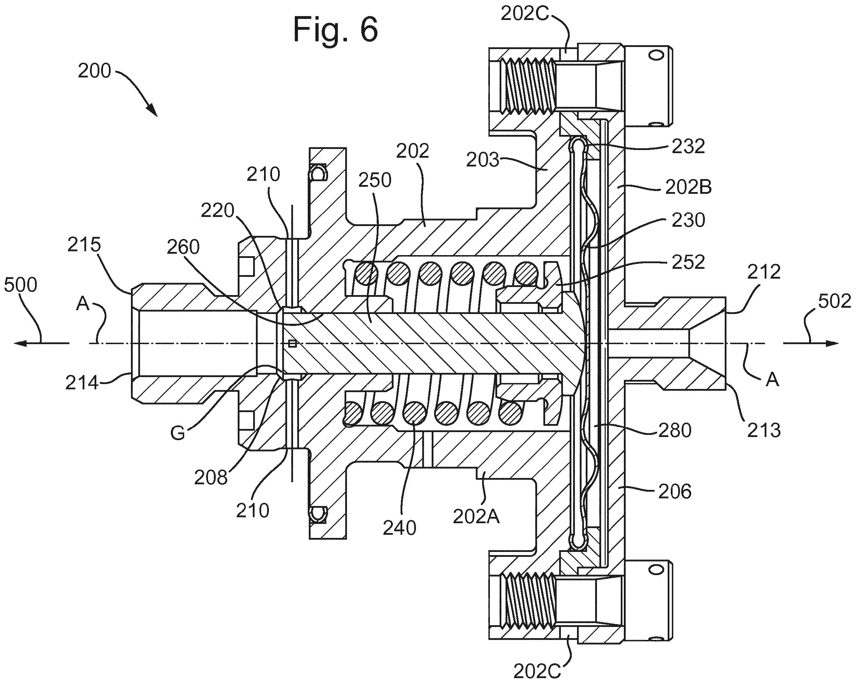

Fig. 6 shows a pressure relief valve 200 according to an embodiment of the present disclosure that operates in a functionally similar manner to the pressure relief valve 100 shown in Fig. 4, but comprises a reduction in parts and a more compact design, as will be described below. The pressure relief valve 200 shown in Fig. 6 may be used in connection with the system 1 in the same manner as the pressure relief valve 100 shown in Fig. 4.

The pressure relief valve 200 comprises a housing 202 having one or more first ports 210, a second port 212 and a third port 214.

The housing 202 may comprise a first part 202A configured as a single piece, fastened to which is a second part 202B of the housing 202 with one or more seal elements 202C disposed therebetween. Alternative arrangements are possible in which the seal elements 202C form part of one or other of the first and second pieces 202A, 202B, or any or all of the first piece 202A, the second piece 202B and the seal elements 202C could be formed as a single piece.

The one or more first ports 210 may be exposed to gas from the input 10 so that the pressure of gas entering the first port 210 may be at the input pressure of the system 1. The first ports 210 may be plural, and may be disposed about a central longitudinal axis A of the pressure relief valve 200. Each of the first ports 210 may extend radially with respect to this axis A from an outer cylindrical surface of the pressure relief valve 200 to a piloted orifice 220 (discussed below).

The second port 212 may be exposed to gas from the pressure regulator 20, and specifically from the downstream end of the pressure regulator 20 (or adjacent to the output of the pressure regulator 20) so that the pressure of gas entering the second port 212 may be at the output pressure of the system 1. In contrast to the pressure relief valve 100 shown in Fig. 4, the second port 212 of the pressure relief valve 200 shown in Fig. 6 is located at an axial end 213 of the pressure relief valve 200, and optionally circumscribes the axis A.

The third port 214 is fluidly connectable to the one or more first ports 210 via the piloted orifice 220, wherein in use gas may pass from the first port 210 to the third port 214 when the orifice 220 is in an open position. Similar to the pressure relief valve 100 shown in Fig. 4 the third port 214 of the pressure relief valve 200 shown in Fig. 6 is located at an opposite axial end 215 of the pressure relief valve 200, and optionally circumscribes the axis A. Similar to the piloted orifice 120 discussed above, the piloted orifice 220 may be closed, or open to varying degrees in order to provide a regulating function for the gas flowing between the first port 210 and the third port 214.

It will be appreciated that providing the second port 212 and third port 214 at opposite axial ends of the pressure relief valve 200, as shown in Fig. 6, allows a more balanced and compact valve, and can also reduce the complexity thereof.

The third port 214 is fluidly connected to the pressure regulator 20, and in accordance with various embodiments with a chamber of the pressure regulator 20, wherein the pressure within the chamber controls a position of one of the operative components of the pressure regulator (e.g., a regulating piston), which can vary the output pressure of the pressure regulator.

One example of a pressure regulator employing a regulating piston can be found in United States Patent Application No. 2017/0220055, which pressure regulator would be suitable as the pressure regulator 20. However, any suitable pressure regulator could be used that employs or otherwise requires a relief valve.

The pressure relief valve 200 further comprises a diaphragm 230 that is configured to flex in a direction along the axis A (e.g., the diaphragm 230 may be resilient). This diaphragm 230 can be seen as replacing the piston 130 shown and described in respect of the pressure relief valve 100 of Fig. 4. That is, the diaphragm 230 is configured to move (e.g., flex) back and forth along the axis A, whilst being retained at its circumference 232 by an annular flange 203 of the first piece 202A of the housing 202 and the one or more seal elements 202C. The diaphragm 230 may have a rest position as shown in Fig. 6.

A resilient member 240 (e.g., a coil spring) may be located between the housing 202, e.g., a portion of the first piece 202A thereof and an abutment 252, and may be configured to bias the abutment 252 in an axial direction as shown by arrow 502.

The pressure relief valve 200 further comprises a pin 250 that circumscribes the axis A, and is movable back and forth along the axis A. The abutment 252 sits between the resilient member 240 and the pin 250, such that the resilient member 240 biases the pin 250 in the same axial direction as the abutment 252 (i.e., in the direction of arrow 502). The pin 250 is configured to rest against a central portion of the diaphragm 230, such that the resilient member 240 also biases the diaphragm 230 in this axial direction. It will be appreciated that movement of the diaphragm 230 back and forth along the axis A causes a corresponding movement of the pin 250 along the axis A.

In various embodiments the pin 250 and the abutment 252 may be a single piece, although in the illustrated embodiment these are shown as separate pieces.

The pin 250 may be slidably received within a bore 260 of the housing 202, which bore 260 may act as a bushing allowing the pin 250 to slide within the bore 260 whilst maintaining substantial contact between the bore 260 and the pin 250.

The pin 250 is movable along the axis A between a first or open position (e.g., a fully open position as shown in Fig. 6) and a second or closed position. In the open position the pin 250 does not block the passage of gas through the orifice 220 (e.g., between the one or more first ports 210 and the third port 214), for example in this position gas may pass through a gap G defined in the orifice 220 between the pin 250 and a rim 208 of the housing 202.

In the closed position the pin 250 closes the orifice 220, e.g., by substantially blocking the passage of gas between the one or more first ports 210 and the third port 214, for example the pin 250 may contact the rim 208 of the housing 202 and close the gap G.

The one or more first ports 210 are configured to receive gas at an input pressure, and the third port 214, which is in fluid communication with the one or more first ports 210 via the orifice 220, is configured to output the gas at an output pressure. The pin 250 is movable along the axis A and is configured to control the passage of gas through the orifice 220 between the one or more first ports 210 and the third port 214, such that the axial position of the pin 250 changes the output pressure of the gas.

The second port 212 of the pressure relief valve 200 fluidly communicates with a chamber 280 that is formed on one side by the diaphragm 230, and on the other side by a wall 206 of the housing 202 (e.g., part of the second piece 202B thereof). The diaphragm 230 is configured so that pressurised air acting on the diaphragm 230 from within the chamber 280 will create a force that opposes the action of the resilient member 240, such that an increase in gas pressure within the chamber 280 causes an increase in force opposing the action of the resilient member 240.

It will be appreciated that the gas pressure within the chamber 280 corresponds directly to the pressure of the gas entering the second port 212, and as such may correspond to the pressure of gas from the pressure regulator 20, and specifically from the downstream end of the pressure regulator 20 (or adjacent the output of the pressure regulator 20), so that the pressure of gas entering the second port 212 and the chamber 280 may be at the output pressure of the system 1.

In other words, the output pressure of the system 1 may act against the action of the resilient member 240 and (above a certain level) because the diaphragm 240 to flex in an axial direction against the action of the resilient member 240 (in the direction of arrow 500). This, in turn, causes the pin 252 move in the same direction and towards a position in which it closes the orifice 220 (i.e., the closed position thereof). Should the output pressure of the system 1 be high enough, therefore, the pin 250 will be moved into its closed position so as to close the orifice 220.

The arrangement of Fig. 6 provides a similar feedback method and mechanism as described above in respect of the embodiment of Fig. 4, wherein the output pressure of the system 1 is used to regulate the displacement of the pin 250 within the pressure relief valve 200 and, in turn, regulate the passage of gas through the pressure relief valve 200 between the input (corresponding to the one or more first ports 210) and the output (corresponding to the third port 214). This provides an effective feedback signal that can be used to optimise the pressure regulation of the pressure regulator.

In contrast to the embodiment of Fig. 4, the pressure relief valve 200 of Fig. 6 includes a reduced number of elements, as well as a reduced amount of friction between moving parts. That is, the piston and required sealing mechanisms (see the seals 190 in Fig. 4) are replaced with a diaphragm 230, which is configured to flex rather than move axially within a passage in the manner of a piston. The embodiment of Fig. 6 also reduces the complexity of the valve, since fewer parts are required and the second port 212 is located at an axial end opposite to the third port 214. This reduces the need for a passing through-hole as is required between the second port 112 and chamber 180 of the Fig. 4 embodiment. Despite the above, it should be noted that the embodiment of Fig. 4 is still advantageous, and although slightly more complex does provide an efficient manner in which to control the relief valve. This embodiment also has more functionality, in that it can provide regulation of the preload by adjusting the regulating pin 170. In the Fig. 6 embodiment, this preload has to be defined by the diaphragm 230 itself, and cannot be substantially altered once the valve is constructed.

Although the present disclosure has been described with reference to various embodiments, it will be understood by those skilled in the art that various changes in form and detail may be made without departing from the scope of the invention as set forth in the accompanying claims.

## Claims

1. A pressure relief valve comprising a first port, a second port and a third port, wherein the first port is configured to receive a first gas at an input pressure, the second port is configured to receive a second gas at a regulating pressure, and the third port is in fluid communication with the first port via an orifice and is configured to output the first gas at an output pressure,
wherein the valve further comprises a diaphragm configured to flex in a direction along an axis and configured to control the passage of gas through the orifice between the first port and the second port, such that the output pressure of the gas is dependent on the flex of the diaphragm,
wherein the valve further comprises a resilient member configured to bias the diaphragm, and a chamber at least partly defined by the diaphragm and in fluid communication with the second port, such that the force exerted by the gas within the chamber on the diaphragm acts against the action of the resilient member.

2. A pressure relief valve as claimed in claim 1, wherein the diaphragm is configured to flex between a rest position, in which a maximum flow of gas is permitted through the orifice, and an open or flexed position, in which a reduced gas flow or substantially no gas flow is permitted through the orifice.

3. A pressure relief valve as claimed in claim 2, wherein the resilient member is configured to bias the diaphragm towards its rest position.

4. A pressure relief valve as claimed in claim 2 or 3, wherein the force exerted by the gas within the chamber on the diaphragm biases the piston towards its open or flexed position.

5. A pressure relief valve as claimed in any preceding claim, further comprising a pin operatively connected to the diaphragm and configured to move along the axis with the diaphragm, such that movement of the diaphragm causes a corresponding movement of the pin.

6. A pressure relief valve as claimed in claim 5, wherein the orifice comprises a gap between the pin and a fixed housing of the valve, wherein movement of the pin along the axis causes the gap to become larger and smaller.

7. A system comprising a pressure relief valve as claimed in any preceding claim, wherein the system further comprises a pressure regulator, and the pressure relief valve is configured to release gas from, and/or reduce the pressure of the gas within the pressure regulator.

8. A system as claimed in claim 7, wherein the pressure regulator comprises a chamber, and the gas pressure within the chamber may be configured to control or otherwise influence a position of one of the operative components of the pressure regulator, wherein the third port is in fluid communication with the chamber of the pressure regulator.

9. A system as claimed in claim 7 or 8, wherein the operative component of the pressure regulator is configured to vary an output pressure of the pressure regulator.

10. A system as claimed in claim 7, 8 or 9, wherein the operative component of the pressure regulator is a regulating piston.

11. A method of operating a pressure relief valve, the method comprising:
receiving a first gas into a first port of the valve at an input pressure;
receiving a second gas into a second port of the valve at a regulating pressure;
outputting the first gas at an output pressure through a third port, wherein the third port is in fluid communication with the first port via an orifice;
flexing a diaphragm to control the passage of gas through the orifice between the first port and the second port, wherein the output pressure of the gas is dependent on the amount of flex of the diaphragm; and
biasing the diaphragm using a resilient member,
wherein the valve comprises a chamber at least partly defined by the diaphragm and in fluid communication with the second port, such that the force exerted by the gas within the chamber on the diaphragm acts against the action of the resilient member.
